# EUROPEAN PATENT APPLICATION

(11) **EP 3 493 137 A1**
(43) Date of publication of application: **05.06.2019**
(21) Application number: 18020094.1
(22) Date of filing: 09.03.2018
(51) Int. Cl.: G06Q 30/02

(54) **METHOD, SYSTEM, AND COMPUTER PROGRAM PRODUCT FOR ANALYZING TRANSACTION ACTIVITY CLUSTERS VIA TRAVEL PATH-GENERATED REGIONS**

(30) Priority: 04.12.2017 WO PCT/US2017/064449
(71) Applicant: Visa International Service Association, San Francisco, California 94128 (US)
(72) Inventor: Banerjee, Kshitij, 417391 Singapore (SG); Rungta, Aditi, 536565 Singapore (SG); Suryadevara, Srinivasa, Rao, 424482 Singapore (SG); Nuti, Hari, Hara, Kumar, 570293 Singapore (SG); Gujar, Giriraj, 506882 Singapore (SG)
(74) Representative: Zeuner Summerer Stütz

(57) **Abstract**

Described are a system, method, and computer program product for analyzing transaction activity clusters to generate travel paths and associated regions in proximity thereto. The method includes receiving transaction data representative of a plurality of transactions between at least one transaction account of an account holder and a plurality of merchants. The transaction data includes at least a geolocation for each transaction. The method also includes generating at least two clusters of transactions and determining at least one point within each cluster of transactions. The method further includes generating at least one route connecting each of the at least two clusters of transactions. The method further includes generating a bounded region including the at least one route and determining a set of merchants within the bounded region. The method further includes associating at least one merchant of the set of merchants with the at least one transaction account.

## Description

### BACKGROUND OF THE INVENTION

### 1. Field of the Invention

Disclosed embodiments relate generally to a system, method, and computer program product for analyzing transaction activity clusters to generate travel paths and associated regions in proximity thereto, and in non-limiting embodiments or aspects, to a system, method, and computer program product for generating a bounded region from which to determine merchants for association with one or more transaction accounts.

### 2. Technical Considerations

Existing systems designed to automatically link customers (e.g., transaction account holders) with merchants, such as marketing, discount, or offer qualification programs, are based either on spend-pattern lookalike algorithms or elementary proximity lookups vis-a-vis merchant locations. These systems do not take into consideration personalized transaction patterns-in terms of travel routes/modes of transport that a customer takes on a regular basis-that can be used to give better relevance to advertisements, discounts, and promotional offers, since the customer is more likely to transact on a travel path that they are frequently following.

There is a need in the art for a customer-specific, intelligent system to determine travel paths of customers and generate region of interests in proximity to the travel paths of the individual customers. There is also a need in the art for a system to associate customers with merchants based on their modes of transportation and the areas of which they are likely to travel and spend money. There is a further need in the art to relevantly communicate those associations to customers and merchants to improve advertisements, promotional offers, and interoperability of customers and merchants in a given region.

### SUMMARY OF THE INVENTION

Accordingly, and generally, provided is an improved system, computer-implemented method, and computer program product for analyzing transaction activity clusters to generate travel paths and associated regions in proximity thereto. Preferably, provided is an improved system, computer-implemented method, and computer program product for receiving transaction data including at least a geolocation for each transaction, generating at least two clusters of transactions, and determining at least one point within each cluster of transactions. Preferably, provided is an improved system, computer-implemented method, and computer program product for generating at least one route connecting each of the at least two clusters of transactions, generating a bounded region including the at least one route, determining a set of merchants within the bounded region, and associating at least one merchant with the at least one transaction account.

According to one preferred and non-limiting embodiment or aspect, provided is a computer-implemented method for analyzing transaction activity clusters to generate travel paths and associated regions in proximity thereto. The method includes receiving, with at least one processor, transaction data representative of a plurality of transactions between at least one transaction account of an account holder and a plurality of merchants in a first time period. The transaction data includes at least a geolocation for each transaction of the plurality of transactions. The method also includes generating, with at least one processor and based at least partially on the transaction data, at least two clusters of transactions. The method further includes determining, with at least one processor, at least one point within each cluster of transactions of the at least two clusters of transactions. The method further includes generating, with at least one processor, at least one route connecting each of the at least two clusters of transactions. The at least one route is generated based at least partially on at least one mode of transportation. The method further includes generating, with at least one processor, a bounded region including the at least one route. The method further includes determining, with at least one processor, a set of merchants within the bounded region. The method further includes associating, with at least one processor, at least one merchant of the set of merchants with the at least one transaction account.

In further preferred and non-limiting embodiments or aspects, the at least two clusters of transactions may be generated based at least partially by executing a density-based clustering algorithm, wherein each point of the at least one point is a cluster centroid. The transaction data may further include a transaction time for each transaction of the plurality of transactions. The method may further include filtering, with at least one processor, the transaction data to include only transactions completed within a subset time period. The method may further include updating at predetermined intervals, with at least one processor, the bounded region by receiving new transaction data and re-generating the at least two clusters of transactions. The transaction data may further include a merchant type for each transaction of the plurality of transactions, wherein the at least one route is generated based at least partially on the at least one mode of transportation determined from a merchant type of at least one transaction of the plurality of transactions.

In further preferred and non-limiting embodiments or aspects, the at least one route may be generated with path segments weighted based on the frequency of transactions with each merchant of the plurality of merchants. The method may further include generating and transmitting, with at least one processor, a communication to the at least one merchant including account holder identification data of the at least one transaction account. The method may further include generating and transmitting, with at least one processor, a communication to the account holder of the at least one transaction account, the communication including an automatic notification to a mobile device of the account holder, and the communication triggered at least partially based on a current location of the mobile device and a location of the at least one merchant. The method may further include, in response to determining that the account holder engaged in at least one new transaction with the at least one merchant in a second time period, updating, with at least one processor, the bounded region by receiving new transaction data and re-generating the at least two clusters of transactions. The method may further include, in response to determining that the account holder engaged in at least one new transaction with the at least one merchant in a second time period, generating and transmitting, with at least one processor, a communication to the at least one merchant including account holder identification data of the at least one transaction account.

According to one preferred and non-limiting embodiment or aspect, provided is a system for analyzing transaction activity clusters to generate travel paths and associated regions in proximity thereto, the system including at least one server computer including at least one processor. The at least one server computer is programmed and/or configured to receive transaction data representative of a plurality of transactions between at least one transaction account of an account holder and a plurality of merchants in a first time period. The transaction data includes at least a geolocation for each transaction of the plurality of transactions. The at least one server computer is also programmed and/or configured to generate, based at least partially on the transaction data, at least two clusters of transactions. The at least one server computer is further programmed and/or configured to determine at least one point within each cluster of transactions of the at least two clusters of transactions. The at least one server computer is further programmed and/or configured to generate at least one route connecting each of the at least two clusters of transactions, the at least one route generated based at least partially on at least one mode of transportation. The at least one server computer is further programmed and/or configured to generate a bounded region including the at least one route. The at least one server computer is further programmed and/or configured to determine a set of merchants within the bounded region. The at least one server computer is further programmed and/or configured to associate at least one merchant of the set of merchants with the at least one transaction account.

In further preferred and non-limiting embodiments or aspects, the at least two clusters of transactions may be generated based at least partially by executing a density-based clustering algorithm, wherein each point of the at least one point is a cluster centroid. The transaction data may further include a transaction time for each transaction of the plurality of transactions. The at least one server computer may be further programmed and/or configured to filter the transaction data to include only transactions completed within a subset time period. The at least one server computer may be further programmed and/or configured to update at predetermined intervals the bounded region by receiving new transaction data and re-generating the at least two clusters of transactions. The transaction data may further include a merchant type for each transaction of the plurality of transactions, wherein the at least one route is generated based at least partially on the at least one mode of transportation determined from a merchant type of at least one transaction of the plurality of transactions.

In further preferred and non-limiting embodiments or aspects, the at least one route may be generated with path segments weighted based on the frequency of transactions with each merchant of the plurality of merchants. The at least one server computer may be further programmed and/or configured to generate and transmit a communication to the at least one merchant including account holder identification data of the at least one transaction account. The at least one server computer may be further programmed and/or configured to generate and transmit a communication to the account holder of the at least one transaction account, the communication including an automatic notification to a mobile device of the account holder, the communication triggered at least partially based on a current location of the mobile device and a location of the at least one merchant. The at least one server computer may be further programmed and/or configured to, in response to determining that the account holder engaged in at least one new transaction with the at least one merchant in a second time period, update the bounded region by receiving new transaction data and re-generating the at least two clusters of transactions. The at least one server computer may be further programmed and/or configured to, in response to determining that the account holder engaged in at least one new transaction with the at least one merchant in a second time period, generate and transmit a communication to the at least one merchant including account holder identification data of the at least one transaction account.

According to one preferred and non-limiting embodiment or aspect, provided is a computer program product for analyzing transaction activity clusters to generate travel paths and associated regions in proximity thereto. The computer program product includes at least one non-transitory computer-readable medium including program instructions that, when executed by at least one processor, cause the at least one processor to receive transaction data representative of a plurality of transactions between at least one transaction account of an account holder and a plurality of merchants in a first time period. The transaction data includes at least a geolocation for each transaction of the plurality of transactions. The program instructions are further programmed and/or configured to generate, based at least partially on the transaction data, at least two clusters of transactions. The program instructions are further programmed and/or configured to determine at least one point within each cluster of transactions of the at least two clusters of transactions. The program instructions are further programmed and/or configured to generate at least one route connecting each of the at least two clusters of transactions, the at least one route generated based at least partially on at least one mode of transportation. The program instructions are further programmed and/or configured to generate a bounded region including the at least one route. The program instructions are further programmed and/or configured to determine a set of merchants within the bounded region. The program instructions are further programmed and/or configured to associate at least one merchant of the set of merchants with the at least one transaction account.

In further preferred and non-limiting embodiments or aspects, the at least two clusters of transactions may be generated based at least partially by executing a density-based clustering algorithm, wherein each point of the at least one point is a cluster centroid. The transaction data may further include a transaction time for each transaction of the plurality of transactions. The program instructions may be further programmed and/or configured to cause the at least one processor to filter the transaction data to include only transactions completed within a subset time period. The program instructions may be further programmed and/or configured to cause the at least one processor to update at predetermined intervals the bounded region by receiving new transaction data and re-generating the at least two clusters of transactions. The transaction data may further include a merchant type for each transaction of the plurality of transactions, wherein the at least one route is generated based at least partially on the at least one mode of transportation determined from a merchant type of at least one transaction of the plurality of transactions.

In further preferred and non-limiting embodiments or aspects, the at least one route may be generated with path segments weighted based on the frequency of transactions with each merchant of the plurality of merchants. The program instructions may be further programmed and/or configured to cause the at least one processor to generate and transmit a communication to the at least one merchant including account holder identification data of the at least one transaction account. The program instructions may be further programmed and/or configured to cause the at least one processor to generate and transmit a communication to the account holder of the at least one transaction account, the communication including an automatic notification to a mobile device of the account holder, and the communication triggered at least partially based on a current location of the mobile device and a location of the at least one merchant. The program instructions may be further programmed and/or configured to cause the at least one processor to, in response to determining that the account holder engaged in at least one new transaction with the at least one merchant in a second time period, update the bounded region by receiving new transaction data and re-generating the at least two clusters of transactions. The program instructions may be further programmed and/or configured to cause the at least one processor to, in response to determining that the account holder engaged in at least one new transaction with the at least one merchant in a second time period, generate and transmit a communication to the at least one merchant including account holder identification data of the at least one transaction account.

Other preferred and non-limiting embodiments or aspects of the present invention will be set forth in the following numbered clauses:
Clause 1: A computer-implemented method for analyzing transaction activity clusters to generate travel paths and associated regions in proximity thereto, the method comprising: receiving, with at least one processor, transaction data representative of a plurality of transactions between at least one transaction account of an account holder and a plurality of merchants in a first time period, the transaction data comprising at least a geolocation for each transaction of the plurality of transactions; generating, with at least one processor and based at least partially on the transaction data, at least two clusters of transactions; determining, with at least one processor, at least one point within each cluster of transactions of the at least two clusters of transactions; generating, with at least one processor, at least one route connecting each of the at least two clusters of transactions, the at least one route generated based at least partially on at least one of the following modes of transportation; generating, with at least one processor, a bounded region comprising the at least one route; determining, with at least one processor, a set of merchants within the bounded region; and associating, with at least one processor, at least one merchant of the set of merchants with the at least one transaction account.
Clause 2: The method of clause 1, wherein the at least two clusters of transactions are generated based at least partially by executing a density-based clustering algorithm, and wherein each point of the at least one point is a cluster centroid.
Clause 3: The method of clause 1 or 2, wherein the transaction data further comprises a transaction time for each transaction of the plurality of transactions, the method further comprising filtering, with at least one processor, the transaction data to comprise only transactions completed within a subset time period.
Clause 4: The method of any of clauses 1-3, further comprising updating at predetermined intervals, with at least one processor, the bounded region by receiving new transaction data and re-generating the at least two clusters of transactions.
Clause 5: The method of any of clauses 1-4, wherein the transaction data further comprises a merchant type for each transaction of the plurality of transactions, and wherein the at least one route is generated based at least partially on the at least one mode of transportation determined from a merchant type of at least one transaction of the plurality of transactions.
Clause 6: The method of any of clauses 1-5, wherein the at least one route is generated with path segments weighted based on the frequency of transactions with each merchant of the plurality of merchants.
Clause 7: The method of any of clauses 1-6, further comprising generating and transmitting, with at least one processor, a communication to the at least one merchant comprising account holder identification data of the at least one transaction account.
Clause 8: The method of any of clauses 1-7, further comprising generating and transmitting, with at least one processor, a communication to the account holder of the at least one transaction account, the communication comprising an automatic notification to a mobile device of the account holder, the communication triggered at least partially based on a current location of the mobile device and a location of the at least one merchant.
Clause 9: The method of any of clauses 1-8, further comprising, in response to determining that the account holder engaged in at least one new transaction with the at least one merchant in a second time period, updating, with at least one processor, the bounded region by receiving new transaction data and re-generating the at least two clusters of transactions.
Clause 10: The method of any of clauses 1-9, further comprising, in response to determining that the account holder engaged in at least one new transaction with the at least one merchant in a second time period, generating and transmitting, with at least one processor, a communication to the at least one merchant comprising account holder identification data of the at least one transaction account.
Clause 11: A system for analyzing transaction activity clusters to generate travel paths and associated regions in proximity thereto, the system comprising at least one server computer including at least one processor, the at least one server computer programmed and/or configured to: receive transaction data representative of a plurality of transactions between at least one transaction account of an account holder and a plurality of merchants in a first time period, the transaction data comprising at least a geolocation for each transaction of the plurality of transactions; generate, based at least partially on the transaction data, at least two clusters of transactions; determine at least one point within each cluster of transactions of the at least two clusters of transactions; generate at least one route connecting each of the at least two clusters of transactions, the at least one route generated based at least partially on at least one mode of transportation; generate a bounded region comprising the at least one route; determine a set of merchants within the bounded region; and associate at least one merchant of the set of merchants with the at least one transaction account.
Clause 12: The system of clause 11, wherein the at least two clusters of transactions are generated based at least partially by executing a density-based clustering algorithm, and wherein each point of the at least one point is a cluster centroid.
Clause 13: The system of clause 11 or 12, wherein the transaction data further comprises a transaction time for each transaction of the plurality of transactions, the at least one server computer being further programmed and/or configured to filter the transaction data to comprise only transactions completed within a subset time period.
Clause 14: The system of any of clauses 11-13, the at least one server computer being further programmed and/or configured to update at predetermined intervals the bounded region by receiving new transaction data and re-generating the at least two clusters of transactions.
Clause 15: The system of any of clauses 11-14, wherein the transaction data further comprises a merchant type for each transaction of the plurality of transactions, and wherein the at least one route is generated based at least partially on the at least one mode of transportation determined from a merchant type of at least one transaction of the plurality of transactions.
Clause 16: The system of any of clauses 11-15, wherein the at least one route is generated with path segments weighted based on the frequency of transactions with each merchant of the plurality of merchants.
Clause 17: The system of any of clauses 11-16, the at least one server computer being further programmed and/or configured to generate and transmit a communication to the at least one merchant comprising account holder identification data of the at least one transaction account.
Clause 18: The system of any of clauses 11-17, the at least one server computer being further programmed and/or configured to generate and transmit a communication to the account holder of the at least one transaction account, the communication comprising an automatic notification to a mobile device of the account holder, the communication triggered at least partially based on a current location of the mobile device and a location of the at least one merchant.
Clause 19: The system of any of clauses 11-18, the at least one server computer being further programmed and/or configured to, in response to determining that the account holder engaged in at least one new transaction with the at least one merchant in a second time period, update the bounded region by receiving new transaction data and re-generating the at least two clusters of transactions.
Clause 20: The system of any of clauses 11-19, the at least one server computer being further programmed and/or configured to, in response to determining that the account holder engaged in at least one new transaction with the at least one merchant in a second time period, generate and transmit a communication to the at least one merchant comprising account holder identification data of the at least one transaction account.
Clause 21: A computer program product for analyzing transaction activity clusters to generate travel paths and associated regions in proximity thereto, the computer program product comprising at least one non-transitory computer-readable medium including program instructions that, when executed by at least one processor, cause the at least one processor to: receive transaction data representative of a plurality of transactions between at least one transaction account of an account holder and a plurality of merchants in a first time period, the transaction data comprising at least a geolocation for each transaction of the plurality of transactions; generate, based at least partially on the transaction data, at least two clusters of transactions; determine at least one point within each cluster of transactions of the at least two clusters of transactions; generate at least one route connecting each of the at least two clusters of transactions, the at least one route generated based at least partially on at least one mode of transportation; generate a bounded region comprising the at least one route; determine a set of merchants within the bounded region; and associate at least one merchant of the set of merchants with the at least one transaction account.
Clause 22: The computer program product of clause 21, wherein the at least two clusters of transactions are generated based at least partially by executing a density-based clustering algorithm, and wherein each point of the at least one point is a cluster centroid.
Clause 23: The computer program product of clause 21 or 22, wherein the transaction data further comprises a transaction time for each transaction of the plurality of transactions, the program instructions being further programmed and/or configured to cause the at least one processor to filter the transaction data to comprise only transactions completed within a subset time period.
Clause 24: The computer program product of any of clauses 21-23, the program instructions being further programmed and/or configured to cause the at least one processor to update at predetermined intervals the bounded region by receiving new transaction data and re-generating the at least two clusters of transactions.
Clause 25: The computer program product of any of clauses 21-24, wherein the transaction data further comprises a merchant type for each transaction of the plurality of transactions, and wherein the at least one route is generated based at least partially on the at least one mode of transportation determined from a merchant type of at least one transaction of the plurality of transactions.
Clause 26: The computer program product of any of clauses 21-25, wherein the at least one route is generated with path segments weighted based on the frequency of transactions with each merchant of the plurality of merchants.
Clause 27: The computer program product of any of clauses 21-26, the program instructions being further programmed and/or configured to cause the at least one processor to generate and transmit a communication to the at least one merchant comprising account holder identification data of the at least one transaction account.
Clause 28: The computer program product of any of clauses 21-27, the program instructions being further programmed and/or configured to cause the at least one processor to generate and transmit a communication to the account holder of the at least one transaction account, the communication comprising an automatic notification to a mobile device of the account holder, the communication triggered at least partially based on a current location of the mobile device and a location of the at least one merchant.
Clause 29: The computer program product of any of clauses 21-28, the program instructions being further programmed and/or configured to cause the at least one processor to, in response to determining that the account holder engaged in at least one new transaction with the at least one merchant in a second time period, update the bounded region by receiving new transaction data and re-generating the at least two clusters of transactions.
Clause 30: The computer program product of any of clauses 21-29, the program instructions being further programmed and/or configured to cause the at least one processor to, in response to determining that the account holder engaged in at least one new transaction with the at least one merchant in a second time period, generate and transmit a communication to the at least one merchant comprising account holder identification data of the at least one transaction account.

These and other features and characteristics of the present invention, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and the claims, the singular form of "a," "an," and "the" include plural referents unless the context clearly dictates otherwise.

### BRIEF DESCRIPTION OF THE DRAWINGS

Additional advantages and details of the invention are explained in greater detail below with reference to the exemplary embodiments that are illustrated in the accompanying schematic figures, in which:
**FIG. 1** is a schematic diagram of one non-limiting embodiment or aspect of a system and method for analyzing transaction activity clusters to generate travel paths and associated regions in proximity thereto;
**FIG. 2** is a flow diagram of one non-limiting embodiment or aspect of a system and method for analyzing transaction activity clusters to generate travel paths and associated regions in proximity thereto;
**FIG. 3** is a schematic diagram of one non-limiting embodiment or aspect of a system and method for analyzing transaction activity clusters to generate travel paths and associated regions in proximity thereto;
**FIG. 4** is a schematic diagram of one non-limiting embodiment or aspect of a system and method for analyzing transaction activity clusters to generate travel paths and associated regions in proximity thereto;
**FIG. 5** is a schematic diagram of one non-limiting embodiment or aspect of a system and method for analyzing transaction activity clusters to generate travel paths and associated regions in proximity thereto;
**FIG. 6** is a schematic diagram of one non-limiting embodiment or aspect of a system and method for analyzing transaction activity clusters to generate travel paths and associated regions in proximity thereto;
**FIG. 7** is a schematic diagram of one non-limiting embodiment or aspect of a system and method for analyzing transaction activity clusters to generate travel paths and associated regions in proximity thereto;
**FIG. 8** is a schematic diagram of one non-limiting embodiment or aspect of a system and method for analyzing transaction activity clusters to generate travel paths and associated regions in proximity thereto;
**FIG. 9** is a schematic diagram of one non-limiting embodiment or aspect of a system and method for analyzing transaction activity clusters to generate travel paths and associated regions in proximity thereto;
**FIG. 10** is a schematic diagram of one non-limiting embodiment or aspect of a system and method for analyzing transaction activity clusters to generate travel paths and associated regions in proximity thereto;
**FIG. 11** is a schematic diagram of one non-limiting embodiment or aspect of a system and method for analyzing transaction activity clusters to generate travel paths and associated regions in proximity thereto;
**FIG. 12** is a schematic diagram of one non-limiting embodiment or aspect of a system and method for analyzing transaction activity clusters to generate travel paths and associated regions in proximity thereto; and
**FIG. 13** is a schematic diagram of one non-limiting embodiment or aspect of a system and method for analyzing transaction activity clusters to generate travel paths and associated regions in proximity thereto.

### DETAILED DESCRIPTION OF THE INVENTION

For purposes of the description hereinafter, the terms "upper," "lower," "right," "left," "vertical," "horizontal," "top," "bottom," "lateral," "longitudinal," and derivatives thereof shall relate to the invention as it is oriented in the drawing figures. However, it is to be understood that the invention may assume various alternative variations and step sequences, except where expressly specified to the contrary. It is also to be understood that the specific devices and process illustrated in the attached drawings, and described in the following specification, are simply exemplary embodiments of the invention. Hence, specific dimensions and other physical characteristics related to the embodiments disclosed herein are not to be considered as limiting. Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

As used herein, the terms "communication" and "communicate" refer to the receipt or transfer of one or more signals, messages, commands, or other type of data. For one unit (*e.g*., any device, system, or component thereof) to be in communication with another unit means that the one unit is able to directly or indirectly receive data from and/or transmit data to the other unit. This may refer to a direct or indirect connection that is wired and/or wireless in nature. Additionally, two units may be in communication with each other even though the data transmitted may be modified, processed, relayed, and/or routed between the first and second unit. For example, a first unit may be in communication with a second unit even though the first unit passively receives data and does not actively transmit data to the second unit. As another example, a first unit may be in communication with a second unit if an intermediary unit processes data from one unit and transmits processed data to the second unit. It will be appreciated that numerous other arrangements are possible.

As used herein, the term "transaction service provider" may refer to an entity that receives transaction authorization requests from merchants or other entities and provides guarantees of payment, in some cases through an agreement between the transaction service provider and an issuer institution. The terms "transaction service provider" and "transaction service provider system" may also refer to one or more computer systems operated by or on behalf of a transaction service provider, such as a transaction processing server executing one or more software applications. A transaction processing server may include one or more processors and, in some non-limiting embodiments, may be operated by or on behalf of a transaction service provider.

As used herein, the term "account identifier" may include one or more Personal Account Numbers (PANs), tokens, or other identifiers associated with a customer account. The term "token" may refer to an identifier that is used as a substitute or replacement identifier for an original account identifier, such as a PAN. Account identifiers may be alphanumeric or any combination of characters and/or symbols. Tokens may be associated with a PAN or other original account identifier in one or more databases such that they can be used to conduct a transaction without directly using the original account identifier. In some examples, an original account identifier, such as a PAN, may be associated with a plurality of tokens for different individuals or purposes. An issuer institution may be associated with a bank identification number (BIN) or other unique identifier that uniquely identifies it among other issuer institutions.

As used herein, the term "merchant" may refer to an individual or entity that provides goods and/or services, or access to goods and/or services, to customers based on a transaction, such as a payment transaction. The term "merchant" or "merchant system" may also refer to one or more computer systems operated by or on behalf of a merchant, such as a server computer executing one or more software applications. A "point-of-sale (POS) system," as used herein, may refer to one or more computers and/or peripheral devices used by a merchant to engage in payment transactions with customers, including one or more card readers, near-field communication (NFC) receivers, RFID receivers, and/or other contactless transceivers or receivers, contact-based receivers, payment terminals, computers, servers, input devices, and/or other like devices that can be used to initiate a payment transaction.

As used herein, the term "mobile device" may refer to one or more portable electronic devices configured to communicate with one or more networks. As an example, a mobile device may include a cellular phone (e.g., a smartphone or standard cellular phone), a portable computer (*e.g.*, a tablet computer, a laptop computer, etc.), a wearable device (*e.g*., a watch, pair of glasses, lens, clothing, and/or the like), a personal digital assistant (PDA), and/or other like devices. The term "client device," as used herein, refers to any electronic device that is configured to communicate with one or more servers or remote devices and/or systems. A client device may include a mobile device, a network-enabled appliance (*e.g*., a network-enabled television, refrigerator, thermostat, and/or the like), a computer, a POS system, and/or any other device or system capable of communicating with a network.

As used herein, the term "financial device" may refer to a portable payment card (*e.g*., a credit or debit card), a gift card, a smartcard, smart media, a payroll card, a healthcare card, a wrist band, a machine-readable medium containing account information, a keychain device or fob, an RFID transponder, a retailer discount or loyalty card, a mobile device executing an electronic wallet application, a PDA, a security card, an access card, a wireless terminal, and/or a transponder, as examples. The financial device may include a volatile or a non-volatile memory to store information, such as an account identifier or a name of the account holder. The financial device may store account credentials locally on the device, in digital or non-digital representation, or may facilitate accessing account credentials stored in a medium that is accessible by the financial device in a connected network.

As used herein, the term "server" may refer to or include one or more processors or computers, storage devices, or similar computer arrangements that are operated by or facilitate communication and processing for multiple parties in a network environment, such as the Internet, although it will be appreciated that communication may be facilitated over one or more public or private network environments and that various other arrangements are possible. Further, multiple computers, *e.g*., servers, or other computerized devices, e.g., POS devices, directly or indirectly communicating in the network environment may constitute a "system," such as a merchant's POS system. Reference to "a server" or "a processor," as used herein, may refer to a previously-recited server and/or processor that is recited as performing a previous step or function, a different server and/or processor, and/or a combination of servers and/or processors. For example, as used in the specification and the claims, a first server and/or a first processor that is recited as performing a first step or function may refer to the same or different server and/or a processor recited as performing a second step or function.

The term "account data," as used herein, refers to any data concerning one or more accounts for one or more users. Account data may include, for example, one or more account identifiers, user identifiers, transaction histories, balances, credit limits, issuer institution identifiers, and/or the like.

In non-limiting embodiments or aspects of the present invention, the invention seeks to determine the most frequented locations/localities at a customer level, and then find out relevant paths that the customer takes between those locations, based on contextual information gathered from the transactions. These travel paths/routes are used to find out merchants that lie in the vicinity, and hence qualify those merchants as applicable/likely for the customer to transact with. Thereby, the region of interest and likelihood of transaction is increased for a customer by including/providing merchants on the customer's travel paths, and not just the merchant transaction locations.

In further non-limiting embodiments or aspects, the invention improves upon existing advertising and alert computer network infrastructures by analyzing and predicting the behavior of a transaction account holder without the need to directly track the location of a transaction account holder with a dedicated device or mobile application. Non-limiting embodiments of the invention further provides the advantage of perceived privacy for the transaction account holder, in that the transaction account holder is not necessarily directly monitored in their moment-to-moment movements. Non-limiting embodiments of the invention also improves on the efficiency of advertising, marketing, and alert systems by improving the relevance of connected users and merchants, while also allowing for anonymization of transaction data and account holder identification when providing analytic data to merchants. Non-limiting embodiments of the invention further provides the advantage of leveraging electronic payment processing systems to generate more accurate and informed regions of user activity. For example, because individual locations for transactions are rich with transaction data concerning transaction type, merchant type, transaction time, transaction amount, and/or the like, a region of interest for an account holder can be generated specific to types of transactions, types of merchants, times of day, etc. This enhanced specificity with the generated regions of interest may be used to improve computerized analytic systems, rewards systems, fraud detection systems, and similar automatic detect-and-act processes that are associated with financial transactions. Finally, the unique network architecture provided by non-limiting embodiments of the invention and the rules carried out thereby provide a tailored technical solution to the described technical problems herein, including shortcomings from irrelevant or inefficient customer-merchant interactions and communications.

In further preferred and non-limiting embodiments or aspects, computation of clusters, routing, and spatial relationships between points of data may be processed by any suitable platform or combination of platforms, including, but not limited to, cluster-computing frameworks (*e.g*., Apache Spark), graphical statistical software (*e.g.*, R and geometric libraries such as "sp" and "k-means"), and map application program interfaces (*e.g*., Google Maps APIs). Although many of the described servers and processors are described as associated with a transaction service provider, the described systems and methods may be carried out on any sufficiently connected third-party system.

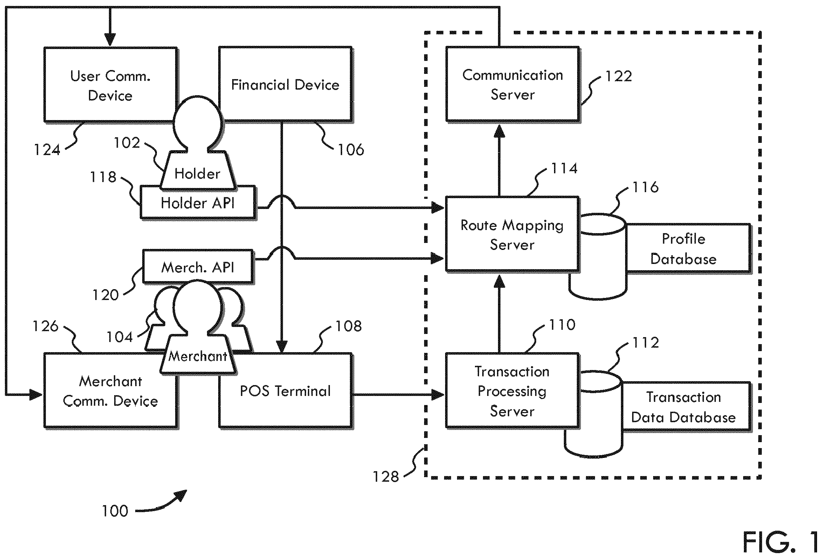

With specific reference to FIG. 1, and in preferred and non-limiting embodiments or aspects of the invention, provided is a system 100 for analyzing transaction activity clusters to generate travel paths and associated regions in proximity thereto. Particularly, the system 100 involves at least one account holder 102 engaging in a plurality of transactions with a plurality of merchants 104. The account holder 102 may use a financial device 106 (which is associated with a transaction account) at a point of sale (POS) terminal 108 to complete a transaction, such as for goods or services. The transaction is received by a transaction processing server 110, associated with a transaction data database 112. The transaction processing server 110 may be associated with and controlled by a transaction service provider 128. Transaction data from the plurality of transactions between the account holder 102 and merchants 104 may be communicated to a route mapping server 114, which may be associated with a profile database 116 for generating and storing transaction geolocation profiles specific to each account holder's 102 transaction history. The route mapping server 114 may also directly communicate with the transaction data database 112 to retrieve transaction data for a given account holder 102 and generate transaction geolocation profiles. The route mapping server 114 may be the same server as the transaction processing server 110 and likewise may be associated with and controlled by a transaction service provider 128. It will be appreciated that many configurations are possible.

With further reference to FIG. 1, and in further preferred and non-limiting embodiments or aspects of the invention, the profile database 116 may, in addition to or instead of storing generated transaction maps, store profile parameters for account holders 102 and/or merchants 104. Profile parameters for account holders 102 may include, but are not limited to, alert/notification settings, preferred mode(s) of transportation, privacy settings, merchant type(s) of interest, good(s)/service(s) of interest, and/or the like. Profile parameters for merchants 104 may include, but are not limited to, alert/notification settings, parking/accessibility information, privacy settings, merchant type, good(s)/service(s) information, operational hour(s), promotional offer(s), discount program(s), paid advertising settings, and/or the like. It will be appreciated that individual account holders 102 may use an account holder-specific application programming interface 118 or portal to communicate with the route mapping server 114 (or like processor) to view, edit, and/or delete their account holder 102 profile parameters. It will be appreciated that individual merchants 104 may use a merchant-specific application programming interface 120 or portal to communicate with the route mapping server 114 (or like processor) to view, edit, and/or delete their merchant 104 profile parameters. It will be appreciated that many configurations are possible.

With further reference to FIG. 1, and in further preferred and non-limiting embodiments or aspects of the invention, the system includes a communication server 122 to communicate with account holders 102 and merchants 104. The communication server 122 may be the same server as the route mapping server 114 and/or the transaction processing server 110 and likewise associated with and controlled by a transaction service provider 128. Communications from the communication server 122 may include notifications/offers that are sent to account holders 122 in the form of emails, text alerts, phone calls, advertisements, web app notifications, and/or the like. Communications to account holders 122 may also be triggered for completion outside of the computer network, such as through direct physical mailings. The communication server 122 may generate and transmit a communication to a user communication device 124 of the account holder 102. The user communication device 124 may be a mobile device, and the communication may include an automatic notification to the user communication device 124 that is triggered at least partially based on a current location of the user communication device 124 and the location of at least one merchant 104. The communication server 122 may also generate and transmit a communication to at least one merchant 104 that includes identification data of the account holder 102 and/or the transaction account associated with the account holder 102. The communication to the merchant 104 may also include information regarding the localities or likely travel paths of known account holders 102, so that the merchant may more efficiently advertise or market to account holders 102. The transaction processing server 110, route mapping server 114, and/or the communication server 122 may then monitor the activity of account holders 102 or merchants 104 to which one or more communications have been sent, to determine if an account holder 102 and merchant 104 engaged in a new transaction at some time after the one or more communications were sent. Transactions after prior-sent communications may trigger the reception of new transaction data and the re-generation of clusters, routes, and bounded regions, per the described method herein. Transactions after prior-sent communications may also trigger additional communications (*e.g*., advertisements, alerts, notifications, emails, texts, etc.) to the account holder 102 or merchant 104, as a positive feedback loop. It will be appreciated that many configurations are possible.

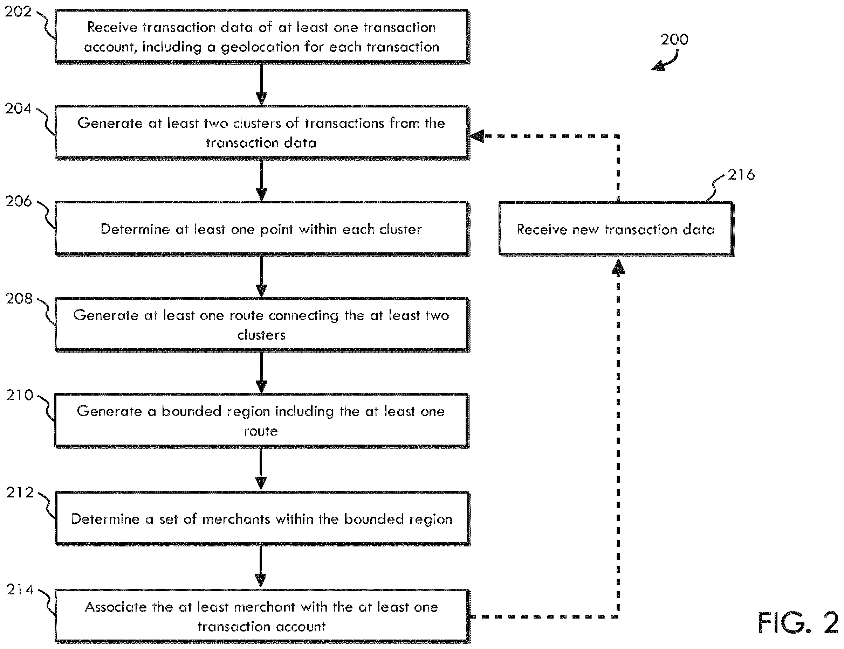

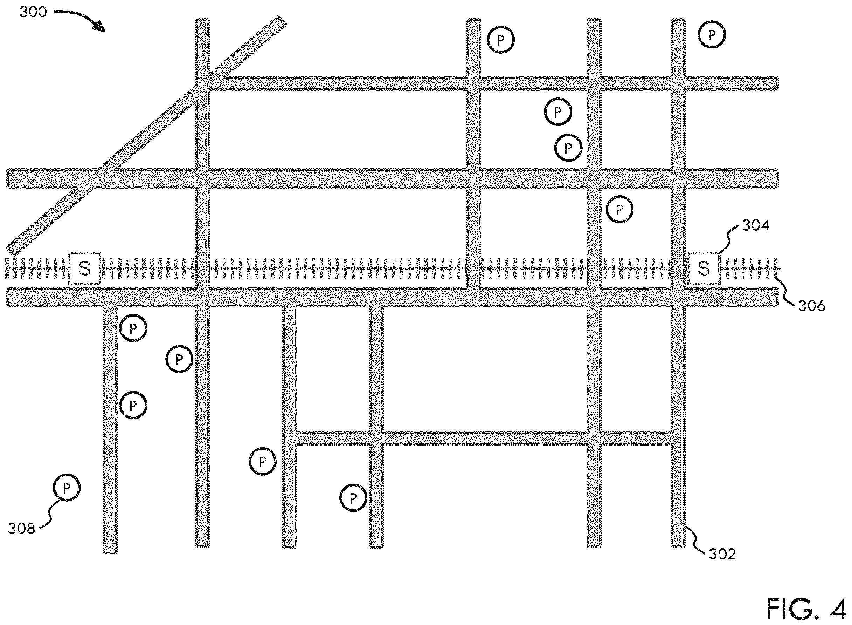

With specific reference to FIG. 2, and in preferred and non-limiting embodiments or aspects of the invention, provided is a method 200 for analyzing transaction activity clusters to generate travel paths and associated regions in proximity thereto. The method may be executed by at least one of the following: the transaction processing server 110, route mapping server 114, communication server 122, or any combination thereof. Two or more of said servers may be combined into one server to perform the functions of the two or more servers. At step 202, the method includes receiving transaction data representative of a plurality of transactions between at least one transaction account of an account holder 102 and a plurality of merchants 104. Transaction data for a number of accounts in a sample time period may be grouped by PANs. A given transaction account may be associated with one or more financial devices 106 of a financial device holder, which may be the account holder 102. A given transaction account may also be associated with multiple account holders 102. The received transaction data may include transactions of multiple account holders 102 with multiple merchants 104. The received transaction data may also be specific to, or filtered to reflect, a transaction account, a particular financial device 106 associated with the transaction account, or an account holder 102. The transaction data includes, for each transaction of the plurality of transactions, at least a geolocation, e.g., latitude and longitude coordinates. The transaction data may further include other transaction parameters, including, but not limited to, merchant type, transaction type, transaction amount, transaction description, transaction time, transaction date, transaction identifier, or any combination thereof. An exemplary visualization of step 202 is further depicted in FIG. 4.

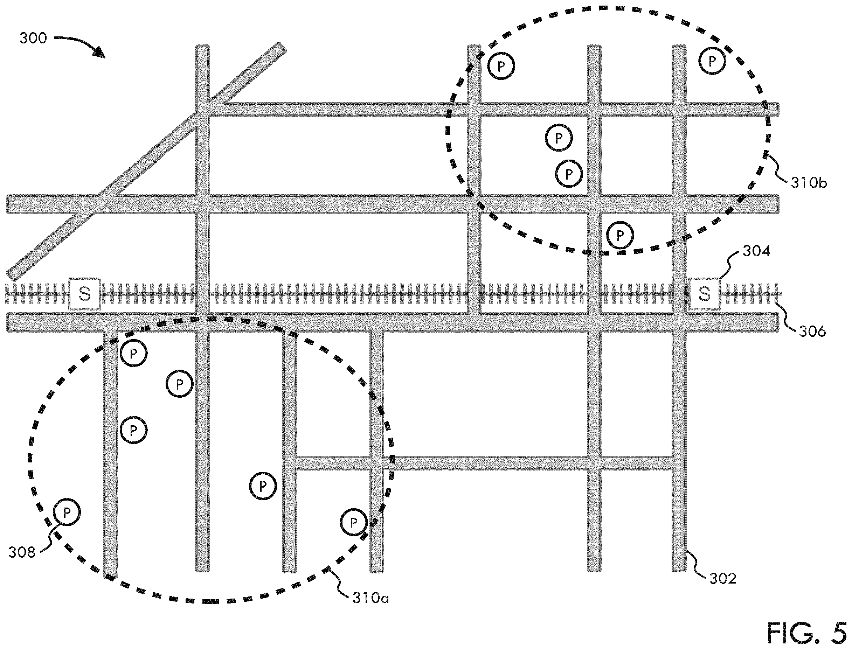

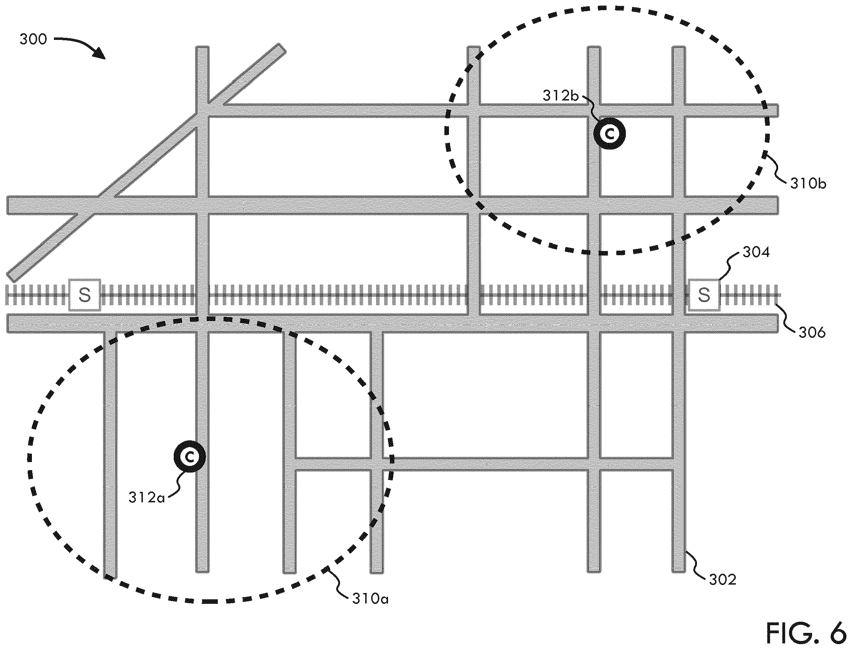

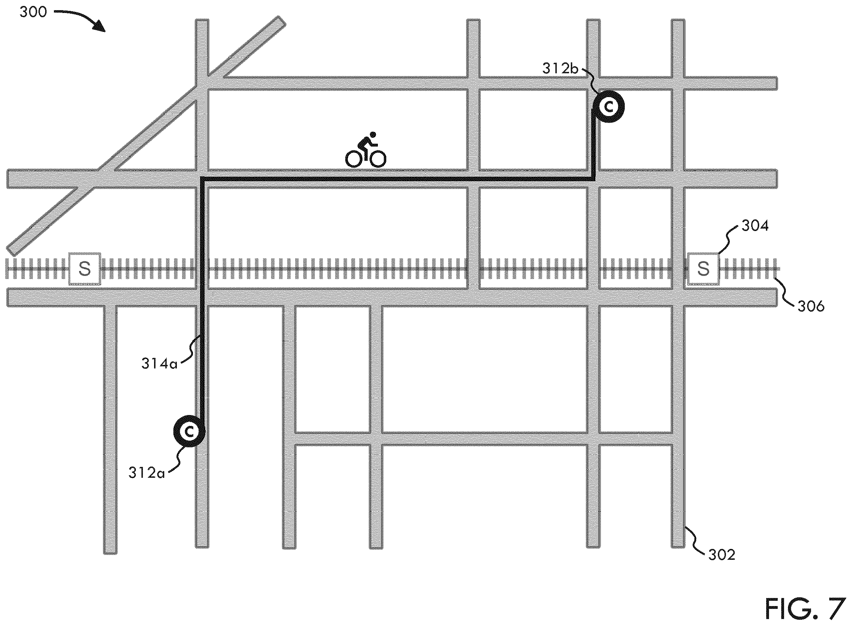

With further reference to FIG. 2, and in further preferred and non-limiting embodiments, at step 204, the method includes generating, based at least partially on the transaction data, at least two clusters of transactions. Any number of clusters may be generated to identify localized or grouped areas of activity. It will be appreciated that the clusters may be generated using any suitable statistical analysis method, including, but not limited to, k-means clustering, expectation-maximization (EM) clustering, density-based spatial clustering of applications with noise (DBSCAN), ordering points to identify the clustering structure (OPTICS), and/or the like. An exemplary visualization of step 204 is further depicted in FIG. 5. At step 206, the method includes determining at least one point within each cluster of transactions that is representative of the generated cluster. Preferably, the at least one point is a centroid of the given cluster, such as a statistical mean of the set of points within a given cluster. An exemplary visualization of step 206 is further depicted in FIG. 6. At step 208, the method further includes generating at least one route connecting each of the at least two clusters of transactions, preferably by generating route segments connecting the determined points that are representative of the clusters. In a non-limiting example, the route may be generated based on the order of occurrence of the underlying transactions across clusters, to prioritize groups of clusters to be used for route generation. In such a case, transaction dates/timestamps may be used to generate the travel path in approximately the order and direction the transactions occurred at the terminal locations. In the example of determining centroids for each of the generated clusters, the route may be generated between and connecting the centroids. Furthermore, the at least one route may be generated based at least partially on at least one of the following modes of transportation: personal vehicle, bus, taxi, rail, biking, walking, or any combination thereof. The at least one route may be generated by a route application programming interface (API) (*e.g*., Google Maps APIs), and the mode of transportation may be automatically determined by conducting analysis of the underlying transaction types and timestamps. For example, a fuel transaction may indicate the use of a personal vehicle, whereas a rail or bus transit purchase may indicate the use of a mode of public transportation. By way of further example, purchases of biking equipment or rental of bikes may suggest bicycle transport, whereas expenditures toward taxi services may indicate commuting by taxi. If the transaction data does not indicate or suggest one transportation type or another, a default transportation mode may be used for generating the at least one route, such as personal vehicular transit. Exemplary visualizations of step 208 are further depicted in FIGS. 7-9. The generated route may be used to generate a directed acyclic graph of a transaction account's transaction behavior. It will be appreciated that many configurations are possible.

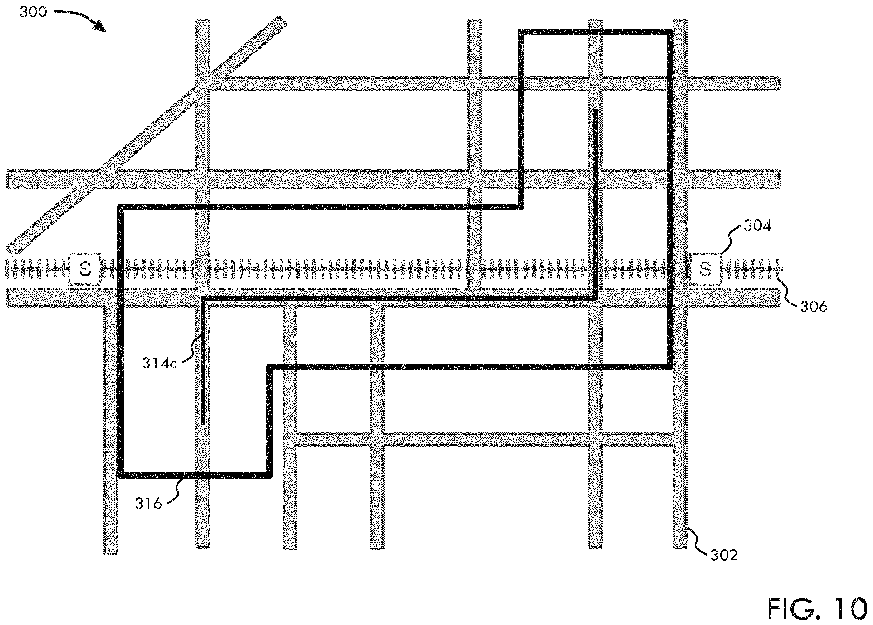

With further reference to FIG. 2, and in further preferred and non-limiting embodiments, at step 210, the method includes generating a bounded region that includes and/or encompasses the generated at least one route. It will be appreciated that any suitable offsetting algorithm and/or capping algorithm may be used to generate the bounded region. For example, multiple cluster centroids may be used to generate a hull via execution of a Graham scan. By way of further example, the server may generate a b-spline representation of the curves of the generated at least one route, and then offset the b-splines in both directions and connect them with caps at the end. A polygonal representation of the enclosing region may be generated from the b-spline control points or from a facet algorithm run on the b-spline. One example, non-limiting algorithm for generating the bounded region of a curve can be found in Hong-Yan Zhao & Guo-Jin Wang, Early Analysis of Reparametrization Based Approaches for Curve Offsetting, 39 Computer-Aided Design 142-148 (2007). Furthermore, an exemplary visualization of step 210 is depicted in FIG. 10. It will be appreciated that many configurations are possible.

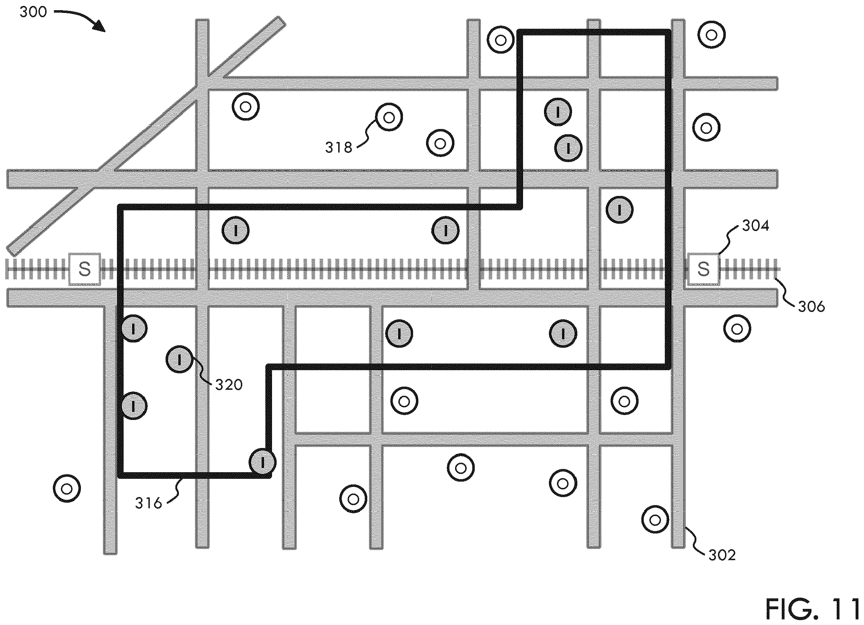

With further reference to FIG. 2, and in further preferred and non-limiting embodiments, at step 212, the method includes determining a set of merchants within the bounded region. For example, once the bounded region is generated, a multi-point-in-polygon query may be conducted over the complete set of merchant data in the associated region to determine the merchants inside the bounded region. An exemplary visualization of step 212 is further depicted in FIG. 11. At step 214, the method includes associating at least one merchant of the set of merchants within the bounded region with the at least one transaction account. Such an association may be completed by one-to-one, one-to-many, or many-to-many record linking with identifiers in the profile database and/or transaction data database. At step 216, for iterative refinement, the method includes updating, at predetermined intervals, the bounded region by receiving new transaction data and re-generating the at least two clusters of transactions, at step 204. The method may then proceed through steps 206-214 to re-determine at least one point within each cluster, generate a new route between clusters, generate a new bounded region for the route, determine a new set of merchants within the new bounded region, and associate at least one merchant of the new set of merchants with the at least one transaction account. In this manner, as information of the associations is provided to merchants and/or transaction account holders, the bounded region model may be updated to account for changes in behavior and/or interactions between merchants and transaction account holders. Many configurations are possible.

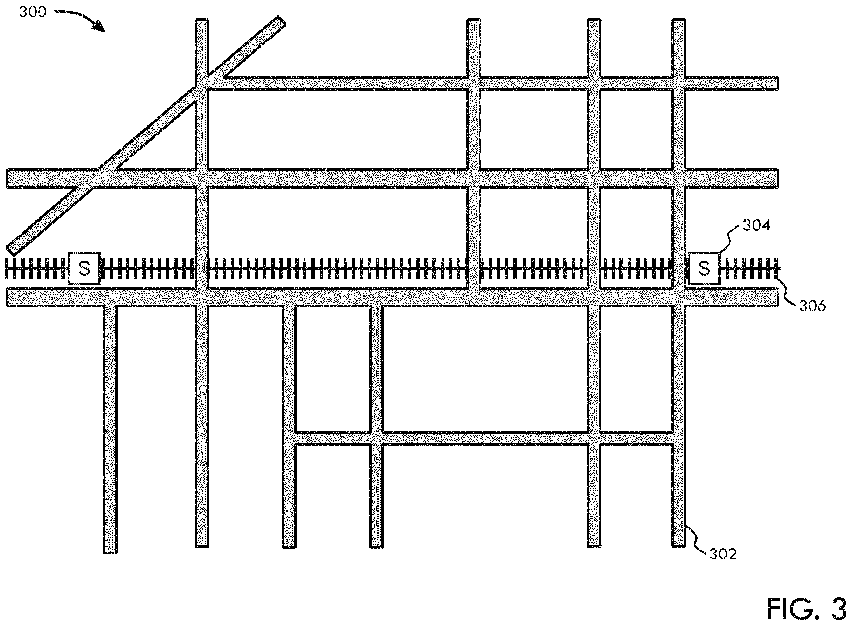

With further reference to FIG. 2 and specific reference to FIG. 3, and in preferred and non-limiting embodiments or aspects of the invention, provided is a visualization map 300 of a system and method for analyzing transaction activity clusters to generate travel paths and associated regions in proximity thereto. Included in the visualization map 300 are transportation channels, including at least roads 302, rail stations (S) 304, and railways 306. Although the illustrative visualization map 300 is provided herein to depict the various steps of the inventive method, a visual display of the map may additionally be provided in an interface (*e.g*., web portal) to a transaction account holder, merchant, and/or system personnel to assist with data review and management of the system processes. It will be appreciated that many configurations are possible.

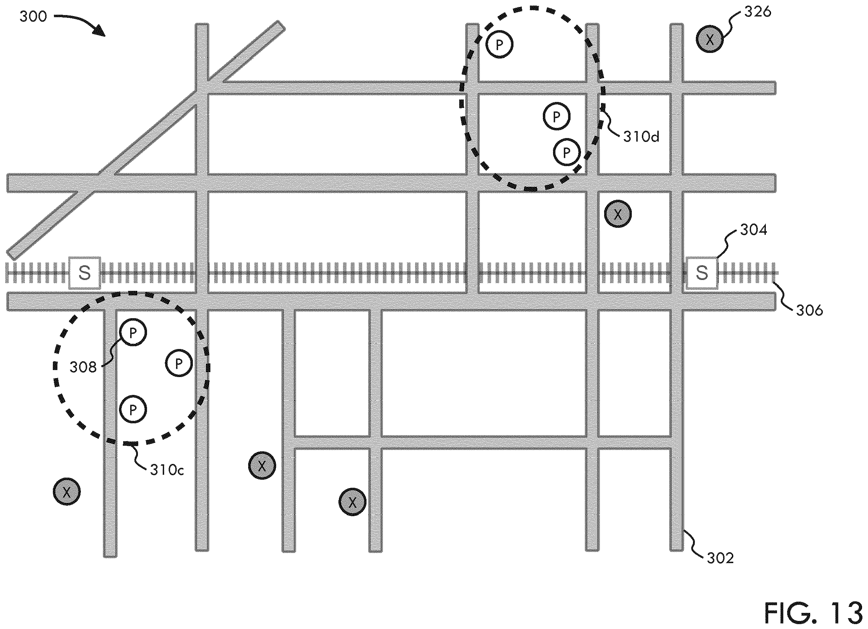

With further reference to FIGS. 2-3 and specific reference to FIG. 4, and in preferred and non-limiting embodiments or aspects of the invention, provided is a visualization map 300 of a system and method for analyzing transaction activity clusters to generate travel paths and associated regions in proximity thereto. The method includes receiving, with at least one processor, transaction data representative of a plurality of transactions between at least one transaction account of an account holder and a plurality of merchants in a first time period, the transaction data including at least a geolocation (*e.g*., latitude and longitude coordinates) for each transaction of the plurality of transactions. Depicted in the visualization map 300 are a number of transaction data points (P) 308, each indicating a geolocation of a transaction completed between the transaction account and a merchant. The method may be separately conducted for a number of transaction accounts in a given region or may be conducted for a group of associated transaction accounts. At this stage, the method may further filter the transaction data to select a subset of transaction data points (P) 308 based on a predetermined time period, transaction type, merchant type, transaction amount, and/or the like. One example filtering process is further depicted in FIG. 13. It will be appreciated that many configurations are possible.

With further reference to FIGS. 2-4 and specific reference to FIG. 5, and in preferred and non-limiting embodiments or aspects of the invention, provided is a visualization map 300 of a system and method for analyzing transaction activity clusters to generate travel paths and associated regions in proximity thereto. The method further includes generating, with at least one processor and based at least partially on the transaction data, at least two clusters of transactions. Depicted in the visualization map 300 are the transaction data points (P) 308 that have been grouped in a first cluster 310a and a second cluster 310b. It will be appreciated that any number of clusters may be generated from the received transaction data, using any suitable statistical analysis method as detailed in the description in reference to FIG. 2. The clusters 310a, 310b are indicated with ellipses for illustrative purposes only and may be otherwise indicated with any visualization suitable for the underlying clustering algorithm, *e.g*., a Voronoi diagram. It will be appreciated that many configurations are possible.

With further reference to FIGS. 2-5 and specific reference to FIG. 6, and in preferred and non-limiting embodiments or aspects of the invention, provided is a visualization map 300 of a system and method for analyzing transaction activity clusters to generate travel paths and associated regions in proximity thereto. The method further includes determining, with at least one processor, at least one point within each cluster of transactions of the at least two clusters of transactions. Depicted in the visualization map 300 are a first cluster point 312a for the first cluster 310a and a second cluster point 312b for the second cluster 310b. Preferably, the at least one point that is representative of a cluster is a centroid of the given cluster, as detailed in the description in reference to FIG. 2. For example, each cluster may be generated by determining groupings of the transaction data points (P) 308 in relation to localized statistical means, forming centroids 312a, 312b. Although two centroids 312a, 312b are depicted, any number of clusters and respective centroids may be generated from the transaction data points (P) 308. Said centroids 312a, 312b may then form vertices for route generation. It will be appreciated that many configurations are possible.

With further reference to FIGS. 2-6 and specific reference to FIGS. 7-9, and in preferred and non-limiting embodiments or aspects of the invention, provided is a visualization map 300 of a system and method for analyzing transaction activity clusters to generate travel paths and associated regions in proximity thereto. The method further includes generating, with at least one processor, at least one route 314 connecting each of the at least two clusters 310 of transactions, the at least one route 314 generated based at least partially on at least one of the following modes of transportation: personal vehicle, bus, taxi, rail, biking, walking, or any combination thereof. Depicted in each of FIGS. 7-9 are the first cluster point 312a and the second cluster point 312b connected by a generated route 314a-314c. It will be appreciated that more than two clusters may be generated, and more than two cluster points 312a, 312b may be determined and used as a part of the route generation. Additionally, the at least one route 314 may be generated with path segments weighted based on the frequency of transactions with each merchant of the plurality of merchants. For example, path segments with high frequency of transactions may have a greater offset in generating the surrounding bounded region, and path segments with low frequency of transactions may have a lesser offset in generating the surrounding bounded region. By way of further example, path segments may be chosen to favor directions near locations of higher frequency of activity and to disfavor directions near locations of lesser frequency of activity. It will be appreciated that many configurations are possible.

With further reference to FIGS. 2-6 and specific reference to FIG. 7, and in further preferred and non-limiting embodiments or aspects of the invention, a route 314a may be generated based on a biking mode of transportation. The route 314a may be generated based on an input parameter specific to the cluster-route generation or may be automatically determined based on analysis of the underlying transaction data. For example, the region may contain bicycle ride sharing stations at which a particular transaction account has been used to rent one or more bicycles. The method may then generate a route 314a near or along one or more ride sharing stations, with the likelihood that the transaction account holder is travelling via those one or more ride sharing stations. When considering a transaction account holder who is biking, the route 314a may be tailored specifically to include biker-friendly channels, such as bike paths, low-traffic roads, wide-shoulder avenues, and/or the like. It will be appreciated that many configurations are possible.

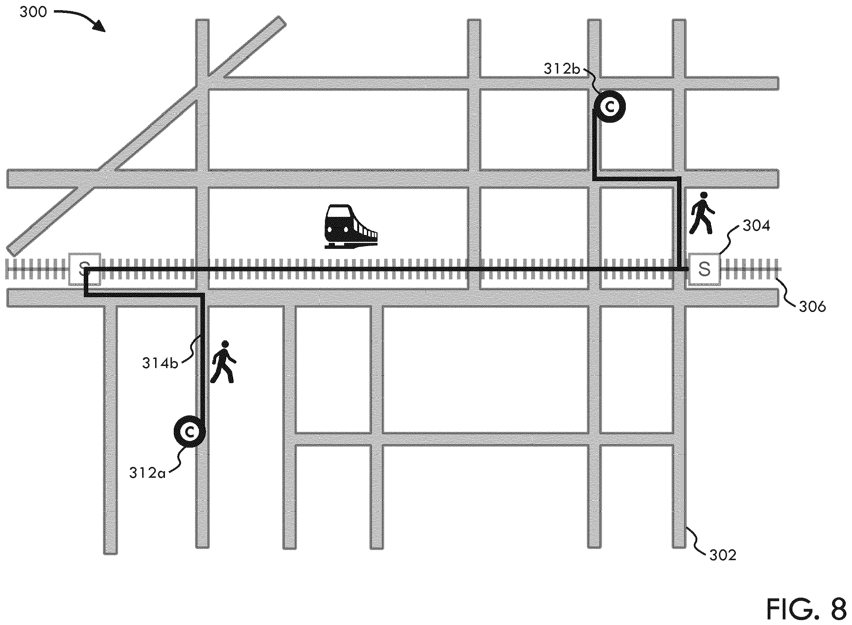

With further reference to FIGS. 2-6 and specific reference to FIG. 8, and in further preferred and non-limiting embodiments or aspects of the invention, a route 314b may be generated based on a rail and walking mode of transportation. The depicted route 314b depicts a combination of rail and walking, but it will be appreciated that any mode of transportation may be considered alone or in combination with any other mode of transportation when generating a route. The route 314b may be generated based on an input parameter specific to the cluster-route generation, or may be automatically determined based on analysis of the underlying transaction data. For example, the region may contain rail transit pass purchase stations at which a particular transaction account has been used to purchase or add money to a rail transit pass. The method may then generate a route 314b near or along one or more rail stations (S) 304, with the likelihood that the transaction account holder is travelling via those one or more rail stations (S) 304. When considering a transaction account holder who is walking, the route 314b may be tailored specifically to include pedestrian-friendly channels, such as walking paths, sidewalks, pedestrian overpasses, and/or the like. It will be appreciated that many configurations are possible.

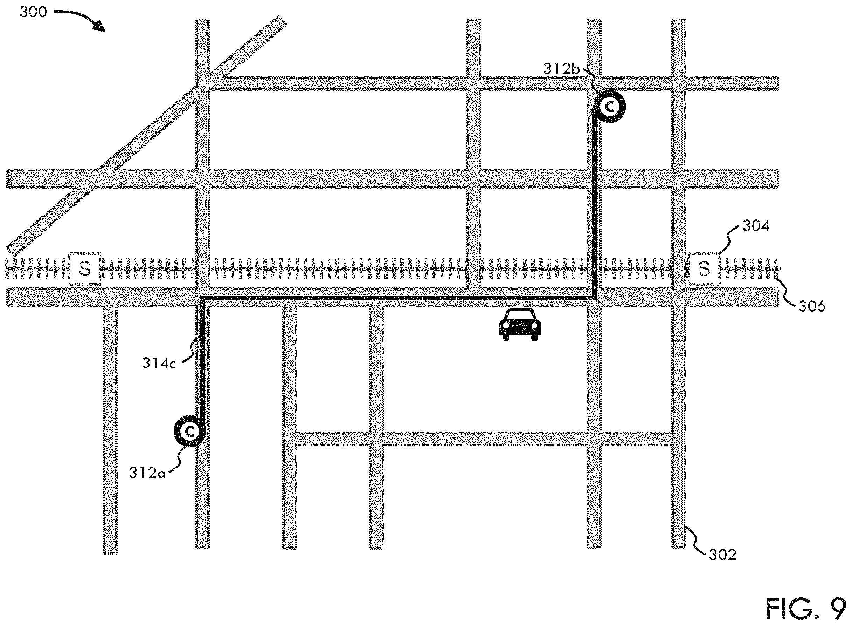

With further reference to FIGS. 2-6 and specific reference to FIG. 9, and in further preferred and non-limiting embodiments or aspects of the invention, a route 314c may be generated based on a bus, taxi, and/or personal vehicle mode of transportation. The depicted route 314c illustrates a route that may have been generated in consideration of bus transit, taxi transit, or personal vehicle transit, but it will be appreciated that any mode of transportation may be considered alone or in combination with any other mode of transportation when generating a route. The route 314c may be generated based on an input parameter specific to the cluster-route generation or may be automatically determined based on analysis of the underlying transaction data. For example, the region may contain gas stations at which a particular transaction account has been used to purchase gasoline. The method may then generate a route 314c tailored to personal vehicle travel and may further avoid bus lanes, high traffic, construction, and/or the like, to generate a route 314c most likely for the transaction account holder to drive along. In another example, the region may contain bus transit pass purchase stations at which a particular transaction account has been used to purchase or add money to a bus transit pass. The method may then generate a route 314c near or along known bus routes between the identified clusters points 312a, 312b. In a further example, the transaction data may indicate the transaction account has been used to purchase taxi services. The method may then generate a route 314c near or along predicted vehicular travel routes. It will be appreciated that many configurations are possible.

With further reference to FIGS. 2-9 and specific reference to FIG. 10, and in preferred and non-limiting embodiments or aspects of the invention, provided is a visualization map 300 of a system and method for analyzing transaction activity clusters to generate travel paths and associated regions in proximity thereto. The method further includes generating, with at least one processor, a bounded region including the at least one route. Depicted is a generated route 314c that is encompassed within a generated bounded region 316. It will be appreciated that the bounded region 316 may encompass all or only part of the generated route 314c and may be generated using any suitable method as detailed in the description in reference to FIG. 2. The generated route 314c of FIG. 9 is used for illustrative purposes, but any suitable generated route may be used for generation of the bounded region. It will be appreciated that many configurations are possible.

With further reference to FIGS. 2-10 and specific reference to FIG. 11, and in preferred and non-limiting embodiments or aspects of the invention, provided is a visualization map 300 of a system and method for analyzing transaction activity clusters to generate travel paths and associated regions in proximity thereto. The method further includes determining, with at least one processor, a set of merchants within the bounded region. Depicted is the bounded region 316 generated from the generated route 314c. The geolocations of merchants may then be compared with the bounded region 316 via reverse mapping to determine outside merchants 318 that are not encompassed by the bounded region 316, and inside merchants 320 that are encompassed by the bounded region 316. The method further includes associating, with at least one processor, at least one merchant of the set of merchants with at least one transaction account. As depicted, one or more merchants from the set of inside merchants 320 may be associated with the subject transaction account from which the transaction data was used to generate the clusters, route, and bounded region. It will also be appreciated that, when bounded regions 316 are generated for multiple transaction accounts, merchants may be provided with statistics of how many people travel around their shop, predicted travel paths of their customer base, and/or the like. It will be appreciated that many configurations are possible.

With further reference to FIGS. 2-11, and in further preferred and non-limiting embodiments or aspects of the invention, a communication may be sent to the account holder of the transaction account and/or to the associated merchant informing the account holder and/or the merchant of the association. A transaction account holder may receive the communication as an automatic notification on their mobile device, which may encourage the account holder to patronize the associated merchant or may automatically offer the account holder discounts, promotional offers, and/or coupons for the associated merchant. Parameters for the automatic communications to account holders may be set by merchants via a merchant API and the parameters may be stored in a profile database. Conversely, the communication sent to the merchant may provide the merchant with identification data of the at least one transaction account, which may facilitate communication directly between the merchant and the associated transaction account. Parameters for the automatic communications to merchants may be set by account holders via an account holder API and the parameters may be stored in a profile database. It will be appreciated that many configurations are possible.

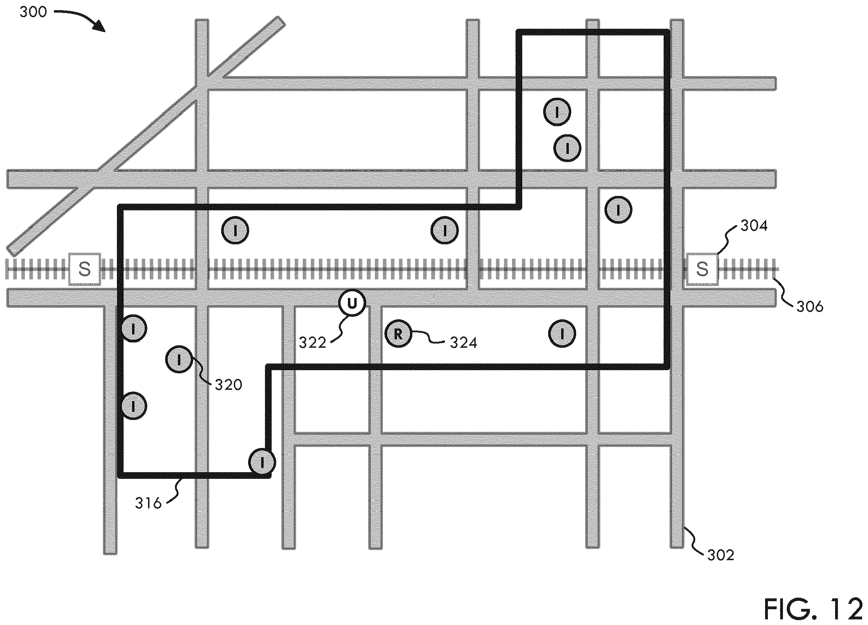

With further reference to FIGS. 2-11 and specific reference to FIG. 12, and in preferred and non-limiting embodiments or aspects of the invention, provided is a visualization map 300 of a system and method for analyzing transaction activity clusters to generate travel paths and associated regions in proximity thereto. The method may further include generating and transmitting, with at least one processor, a communication to the account holder of the at least one transaction account, the communication including an automatic notification to a mobile device of the account holder, the communication triggered at least partially based on a current location of the mobile device and a location of the at least one merchant. Depicted is the generated bounded region 316 with a set of inside merchants 320. Also depicted is an exemplary geolocation of the mobile device user 322, who is the transaction account holder corresponding to the transaction data from which the bounded region 316 was generated. The geolocation of the mobile device user 322 may be used to determine an inside merchant 320 of closest proximity, depicted as the recommended merchant 324. Identification data of the recommended merchant 324 may be communicated to the mobile device user 322, particularly in response the mobile device user's 322 proximity to the recommended merchant 324. It will be appreciated that many configurations are possible.

With further reference to FIGS. 2-12 and specific reference to FIG. 13, and in preferred and non-limiting embodiments or aspects of the invention, provided is a visualization map 300 of a system and method for analyzing transaction activity clusters to generate travel paths and associated regions in proximity thereto. The method may further include filtering, with at least one processor, the transaction data to include only transactions completed within a subset time period. Depicted are transaction data points (P) 308 within a region that are from a subset time period (e.g., hour, day, week, month, etc.). Data points outside that subset time period are depicted as excluded data points (X) 326. Filtered data points (P) 308 may be used to generate one or more filtered clusters, such as depicted with a first filtered cluster 310c and a second filtered cluster 310d. This may change the representative points (e.g., centroids) determined from the generated clusters 310c, 310d, the generated route, the generated bounded region, and the set of merchants from which one or more merchants may be associated with the transaction account. Filtering transaction data points (P) 308 provides the advantage of generating a bounded region specific to the travel/transaction habits of the transaction account holder within the filter's subset time period. For example, the transaction account holder may have one travel path in the morning and one travel path in the evening. By way of another example, the transaction account holder may have varying travel paths from day to day or week to week. Filtration of the data points (P) 308 allows for a more detailed analysis and tailored generation of the bounded regions. It will be appreciated that the described filtering may be conducted for other parameters of the transaction data, including, but not limited to, merchant type, transaction type, transaction amount, transaction description, transaction identifier, or any combination thereof. It will be appreciated that many configurations are possible.

In further reference to the foregoing figures, and in further preferred and non-limiting embodiments or aspects of the invention, described herein is an exemplary interaction with the system from a transaction account holder's perspective. The transaction account holder may use an account holder API to set their profile parameters with merchant types that interest them, such as clothing stores and cafés. The account holder may also use the account holder API to set their mobile device notification settings to allow alerts when merchants of interest are identified along their travel paths/in their bounded regions. The account holder then uses one or more financial devices linked with a transaction account to engage in transactions within a region, such as grocery shopping, buying gas for their car, reloading credits on their bus transit pass, buying coffee, buying clothes, and/or the like. This transaction data is received by the transaction processing server of the transaction service provider and is stored to later create a transaction geolocation profile of the account holder. To that end, the route mapping server may use the received transaction data to generate clusters of activity for the account holder. For example, the account holder may predominantly spend money around their home, their place of work, and their significant other's home. These geographical groupings of transactions may be used to generate three clusters, and centroids of the three clusters may be determined to represent the three geographical groupings.

The route mapping server may then generate a route connecting the centroids of the generated clusters. The generation of the route may be in response to a user request, merchant request, or automated trigger. This route may be informed by the transactions of the account holder. By way of example, the account holder may have reloaded their bus transit pass with money at a pay station near their place of work; therefore, the route mapping server may generate a route between the account holder's home centroid and the account holder's work centroid based on a bus line from a public transit routing API. The account holder may have also purchased gasoline for the car near their home centroid and near their significant other's home centroid. The route mapping server may then generate a route between those centroids based on a personal vehicle path routing API. The bus route and the personal vehicle route may be combined into one shared route or may be analyzed separately to create separate bounded regions. In either scenario, an offset is applied to the routes to create a bounded region around which the account holder is likely to travel and patronize merchants. One or more merchants within the bounded region may be associated with the account holder, and information about merchants may be communicated to the account holder. For example, the account holder, when driving their car to their significant other's home, may be within the bounded region, and based on the account holder's profile parameters, a communication may be sent to the account holder's mobile device to alert them of a café nearby. In so doing, a coupon, advertisement, or promotional offer may be automatically sent to the account holder's mobile device, based on the profile parameters set by a merchant. It will be appreciated that many configurations are possible.

In further preferred and non-limiting embodiments or aspects of the invention, described herein is an exemplary interaction with the system from a merchant's perspective. A merchant may be interested in carrying out an automated advertisement campaign to target relevant customers within their region. The merchant may use a merchant API to set the profile parameters, including target audience, number of advertisements/coupons/offers, details of advertisements/coupons/offers, date range of advertisement campaign, and/or the like. The merchant may receive from the transaction service provider a list of account holders that they have been associated with in their region (based on each account holder's generated bounded region). The data may be anonymized, or the account holders may opt-in to providing identification data in exchange for discounts, refunds, or offers. The merchant may also opt-in to allowing automated advertisements, in which account holders may be automatically alerted to the merchant when associated with their bounded region. The automated advertisements may be time dependent, location dependent, or transaction dependent. It will be appreciated that many configurations are possible.

Although the invention has been described in detail for the purpose of illustration based on what is currently considered to be the most practical and preferred and non-limiting embodiments, it is to be understood that such detail is solely for that purpose and that the invention is not limited to the disclosed embodiments, but, on the contrary, is intended to cover modifications and equivalent arrangements that are within the spirit and scope of the appended claims. For example, it is to be understood that the present invention contemplates that, to the extent possible, one or more features of any embodiment can be combined with one or more features of any other embodiment.

Numbered embodiments forming part of the description:
Embodiment 1: A computer-implemented method for analyzing transaction activity clusters to generate travel paths and associated regions in proximity thereto, the method comprising:
   receiving, with at least one processor, transaction data representative of a plurality of transactions between at least one transaction account of an account holder and a plurality of merchants in a first time period, the transaction data comprising at least a geolocation for each transaction of the plurality of transactions;
   generating, with at least one processor and based at least partially on the transaction data, at least two clusters of transactions;
   determining, with at least one processor, at least one point within each cluster of transactions of the at least two clusters of transactions;
   generating, with at least one processor, at least one route connecting each of the at least two clusters of transactions, the at least one route generated based at least partially on at least one mode of transportation;
   generating, with at least one processor, a bounded region comprising the at least one route;
   determining, with at least one processor, a set of merchants within the bounded region; and
   associating, with at least one processor, at least one merchant of the set of merchants with the at least one transaction account.
Embodiment 2: The method of embodiment 1, wherein the at least two clusters of transactions are generated based at least partially by executing a density-based clustering algorithm, and wherein each point of the at least one point is a cluster centroid.
Embodiment 3: The method of embodiment 1, wherein the transaction data further comprises a transaction time for each transaction of the plurality of transactions, the method further comprising filtering, with at least one processor, the transaction data to comprise only transactions completed within a subset time period.
Embodiment 4: The method of embodiment 1, further comprising updating at predetermined intervals, with at least one processor, the bounded region by receiving new transaction data and re-generating the at least two clusters of transactions.
Embodiment 5: The method of embodiment 1, wherein the transaction data further comprises a merchant type for each transaction of the plurality of transactions, and wherein the at least one route is generated based at least partially on the at least one mode of transportation determined from a merchant type of at least one transaction of the plurality of transactions.
Embodiment 6: The method of embodiment 1, wherein the at least one route is generated with path segments weighted based on the frequency of transactions with each merchant of the plurality of merchants.
Embodiment 7: The method of embodiment 1, further comprising generating and transmitting, with at least one processor, a communication to the at least one merchant comprising account holder identification data of the at least one transaction account.
Embodiment 8: The method of embodiment 1, further comprising generating and transmitting, with at least one processor, a communication to the account holder of the at least one transaction account, the communication comprising an automatic notification to a mobile device of the account holder, the communication triggered at least partially based on a current location of the mobile device and a location of the at least one merchant.
Embodiment 9: The method of embodiment 8, further comprising, in response to determining that the account holder engaged in at least one new transaction with the at least one merchant in a second time period, updating, with at least one processor, the bounded region by receiving new transaction data and re-generating the at least two clusters of transactions.
Embodiment 10: The method of embodiment 8, further comprising, in response to determining that the account holder engaged in at least one new transaction with the at least one merchant in a second time period, generating and transmitting, with at least one processor, a communication to the at least one merchant comprising account holder identification data of the at least one transaction account.
Embodiment 11: A system for analyzing transaction activity clusters to generate travel paths and associated regions in proximity thereto, the system comprising at least one server computer including at least one processor, the at least one server computer programmed and/or configured to:
   receive transaction data representative of a plurality of transactions between at least one transaction account of an account holder and a plurality of merchants in a first time period, the transaction data comprising at least a geolocation for each transaction of the plurality of transactions;
   generate, based at least partially on the transaction data, at least two clusters of transactions;
   determine at least one point within each cluster of transactions of the at least two clusters of transactions;
   generate at least one route connecting each of the at least two clusters of transactions, the at least one route generated based at least partially on at least one mode of transportation;
   generate a bounded region comprising the at least one route;
   determine a set of merchants within the bounded region; and
   associate at least one merchant of the set of merchants with the at least one transaction account.
Embodiment 12: The system of embodiment 11, wherein the at least two clusters of transactions are generated based at least partially by executing a density-based clustering algorithm, and wherein each point of the at least one point is a cluster centroid.
Embodiment 13: The system of embodiment 11, wherein the transaction data further comprises a transaction time for each transaction of the plurality of transactions, the at least one server computer being further programmed and/or configured to filter the transaction data to comprise only transactions completed within a subset time period.
Embodiment 14: The system of embodiment 11, the at least one server computer being further programmed and/or configured to update at predetermined intervals the bounded region by receiving new transaction data and re-generating the at least two clusters of transactions.
Embodiment 15: The system of embodiment 11, wherein the transaction data further comprises a merchant type for each transaction of the plurality of transactions, and wherein the at least one route is generated based at least partially on the at least one mode of transportation determined from a merchant type of at least one transaction of the plurality of transactions.
Embodiment 16: The system of embodiment 11, wherein the at least one route is generated with path segments weighted based on the frequency of transactions with each merchant of the plurality of merchants.
Embodiment 17: The system of embodiment 11, the at least one server computer being further programmed and/or configured to generate and transmit a communication to the at least one merchant comprising account holder identification data of the at least one transaction account.
Embodiment 18: The system of embodiment 11, the at least one server computer being further programmed and/or configured to generate and transmit a communication to the account holder of the at least one transaction account, the communication comprising an automatic notification to a mobile device of the account holder, the communication triggered at least partially based on a current location of the mobile device and a location of the at least one merchant.
Embodiment 19: The system of embodiment 18, the at least one server computer being further programmed and/or configured to, in response to determining that the account holder engaged in at least one new transaction with the at least one merchant in a second time period, update the bounded region by receiving new transaction data and re-generating the at least two clusters of transactions.
Embodiment 20: The system of embodiment 18, the at least one server computer being further programmed and/or configured to, in response to determining that the account holder engaged in at least one new transaction with the at least one merchant in a second time period, generate and transmit a communication to the at least one merchant comprising account holder identification data of the at least one transaction account.
Embodiment 21: A computer program product for analyzing transaction activity clusters to generate travel paths and associated regions in proximity thereto, the computer program product comprising at least one non-transitory computer-readable medium including program instructions that, when executed by at least one processor, cause the at least one processor to:
   receive transaction data representative of a plurality of transactions between at least one transaction account of an account holder and a plurality of merchants in a first time period, the transaction data comprising at least a geolocation for each transaction of the plurality of transactions;
   generate, based at least partially on the transaction data, at least two clusters of transactions;
   determine at least one point within each cluster of transactions of the at least two clusters of transactions;
   generate at least one route connecting each of the at least two clusters of transactions, the at least one route generated based at least partially on at least one mode of transportation;
   generate a bounded region comprising the at least one route;
   determine a set of merchants within the bounded region; and
   associate at least one merchant of the set of merchants with the at least one transaction account.
Embodiment 22: The computer program product of embodiment 21, wherein the at least two clusters of transactions are generated based at least partially by executing a density-based clustering algorithm, and wherein each point of the at least one point is a cluster centroid.
Embodiment 23: The computer program product of embodiment 21, wherein the transaction data further comprises a transaction time for each transaction of the plurality of transactions, the program instructions being further programmed and/or configured to cause the at least one processor to filter the transaction data to comprise only transactions completed within a subset time period.
Embodiment 24: The computer program product of embodiment 21, the program instructions being further programmed and/or configured to cause the at least one processor to update at predetermined intervals the bounded region by receiving new transaction data and re-generating the at least two clusters of transactions.
Embodiment 25: The computer program product of embodiment 21, wherein the transaction data further comprises a merchant type for each transaction of the plurality of transactions, and wherein the at least one route is generated based at least partially on the at least one mode of transportation determined from a merchant type of at least one transaction of the plurality of transactions.
Embodiment 26: The computer program product of embodiment 21, wherein the at least one route is generated with path segments weighted based on the frequency of transactions with each merchant of the plurality of merchants.
Embodiment 27: The computer program product of embodiment 21, the program instructions being further programmed and/or configured to cause the at least one processor to generate and transmit a communication to the at least one merchant comprising account holder identification data of the at least one transaction account.
Embodiment 28: The computer program product of embodiment 21, the program instructions being further programmed and/or configured to cause the at least one processor to generate and transmit a communication to the account holder of the at least one transaction account, the communication comprising an automatic notification to a mobile device of the account holder, the communication triggered at least partially based on a current location of the mobile device and a location of the at least one merchant.
Embodiment 29: The computer program product of embodiment 28, the program instructions being further programmed and/or configured to cause the at least one processor to, in response to determining that the account holder engaged in at least one new transaction with the at least one merchant in a second time period, update the bounded region by receiving new transaction data and re-generating the at least two clusters of transactions.
Embodiment 30: The computer program product of embodiment 28, the program instructions being further programmed and/or configured to cause the at least one processor to, in response to determining that the account holder engaged in at least one new transaction with the at least one merchant in a second time period, generate and transmit a communication to the at least one merchant comprising account holder identification data of the at least one transaction account.

## Claims

1. A computer-implemented method for analyzing transaction activity clusters to generate travel paths and associated regions in proximity thereto, the method comprising:
receiving, with at least one processor, transaction data representative of a plurality of transactions between at least one transaction account of an account holder and a plurality of merchants in a first time period, the transaction data comprising at least a geolocation for each transaction of the plurality of transactions;
generating, with at least one processor and based at least partially on the transaction data, at least two clusters of transactions;
determining, with at least one processor, at least one point within each cluster of transactions of the at least two clusters of transactions;
generating, with at least one processor, at least one route connecting each of the at least two clusters of transactions, the at least one route generated based at least partially on at least one mode of transportation;
generating, with at least one processor, a bounded region comprising the at least one route;
determining, with at least one processor, a set of merchants within the bounded region; and
associating, with at least one processor, at least one merchant of the set of merchants with the at least one transaction account.

2. The method of claim 1,
- wherein the at least two clusters of transactions are generated based at least partially by executing a density-based clustering algorithm, and wherein each point of the at least one point is a cluster centroid, or
- wherein the at least one route is generated with path segments weighted based on the frequency of transactions with each merchant of the plurality of merchants..

3. The method of claim 1,
- wherein the transaction data further comprises a transaction time for each transaction of the plurality of transactions, the method further comprising filtering, with at least one processor, the transaction data to comprise only transactions completed within a subset time period, or
- wherein the transaction data further comprises a merchant type for each transaction of the plurality of transactions, and wherein the at least one route is generated based at least partially on the at least one mode of transportation determined from a merchant type of at least one transaction of the plurality of transactions.

4. The method of claim 1, further comprising updating at predetermined intervals, with at least one processor, the bounded region by receiving new transaction data and re-generating the at least two clusters of transactions.

5. The method of claim 1, further comprising
i) generating and transmitting, with at least one processor, a communication to the at least one merchant comprising account holder identification data of the at least one transaction account, or
ii) generating and transmitting, with at least one processor, a communication to the account holder of the at least one transaction account, the communication comprising an automatic notification to a mobile device of the account holder, the communication triggered at least partially based on a current location of the mobile device and a location of the at least one merchant,
- wherein preferably in response to determining that the account holder engaged in at least one new transaction with the at least one merchant in a second time period, updating, with at least one processor, the bounded region by receiving new transaction data and re-generating the at least two clusters of transactions, or
- wherein preferably in response to determining that the account holder engaged in at least one new transaction with the at least one merchant in a second time period, generating and transmitting, with at least one processor, a communication to the at least one merchant comprising account holder identification data of the at least one transaction account.

6. A system for analyzing transaction activity clusters to generate travel paths and associated regions in proximity thereto, the system comprising at least one server computer including at least one processor, the at least one server computer programmed and/or configured to:
receive transaction data representative of a plurality of transactions between at least one transaction account of an account holder and a plurality of merchants in a first time period, the transaction data comprising at least a geolocation for each transaction of the plurality of transactions;
generate, based at least partially on the transaction data, at least two clusters of transactions;
determine at least one point within each cluster of transactions of the at least two clusters of transactions;
generate at least one route connecting each of the at least two clusters of transactions, the at least one route generated based at least partially on at least one mode of transportation;
generate a bounded region comprising the at least one route;
determine a set of merchants within the bounded region; and
associate at least one merchant of the set of merchants with the at least one transaction account.

7. The system of claim 6,
- wherein the at least two clusters of transactions are generated based at least partially by executing a density-based clustering algorithm, and wherein each point of the at least one point is a cluster centroid, or
- wherein the at least one route is generated with path segments weighted based on the frequency of transactions with each merchant of the plurality of merchants.

8. The system of claim 6,
- wherein the transaction data further comprises a transaction time for each transaction of the plurality of transactions, the at least one server computer being further programmed and/or configured to filter the transaction data to comprise only transactions completed within a subset time period, or
- wherein the transaction data further comprises a merchant type for each transaction of the plurality of transactions, and wherein the at least one route is generated based at least partially on the at least one mode of transportation determined from a merchant type of at least one transaction of the plurality of transactions.

9. The system of claim 6, the at least one server computer being further programmed and/or configured to update at predetermined intervals the bounded region by receiving new transaction data and re-generating the at least two clusters of transactions.

10. The system of claim 6, the at least one server computer being further programmed and/or configured
i) to generate and transmit a communication to the at least one merchant comprising account holder identification data of the at least one transaction account, or
ii) to generate and transmit a communication to the account holder of the at least one transaction account, the communication comprising an automatic notification to a mobile device of the account holder, the communication triggered at least partially based on a current location of the mobile device and a location of the at least one merchant,
- the at least one server computer preferably being further programmed and/or configured to, in response to determining that the account holder engaged in at least one new transaction with the at least one merchant in a second time period, update the bounded region by receiving new transaction data and re-generating the at least two clusters of transactions, or
- the at least one server computer preferably being further programmed and/or configured to, in response to determining that the account holder engaged in at least one new transaction with the at least one merchant in a second time period, generate and transmit a communication to the at least one merchant comprising account holder identification data of the at least one transaction account.

11. A computer program product for analyzing transaction activity clusters to generate travel paths and associated regions in proximity thereto, the computer program product comprising at least one non-transitory computer-readable medium including program instructions that, when executed by at least one processor, cause the at least one processor to:
receive transaction data representative of a plurality of transactions between at least one transaction account of an account holder and a plurality of merchants in a first time period, the transaction data comprising at least a geolocation for each transaction of the plurality of transactions;
generate, based at least partially on the transaction data, at least two clusters of transactions;
determine at least one point within each cluster of transactions of the at least two clusters of transactions;
generate at least one route connecting each of the at least two clusters of transactions, the at least one route generated based at least partially on at least one mode of transportation;
generate a bounded region comprising the at least one route;
determine a set of merchants within the bounded region; and
associate at least one merchant of the set of merchants with the at least one transaction account.

12. The computer program product of claim 11,
- wherein the at least two clusters of transactions are generated based at least partially by executing a density-based clustering algorithm, and wherein each point of the at least one point is a cluster centroid, or
- wherein the at least one route is generated with path segments weighted based on the frequency of transactions with each merchant of the plurality of merchants.

13. The computer program product of claim 11,
- wherein the transaction data further comprises a transaction time for each transaction of the plurality of transactions, the program instructions being further programmed and/or configured to cause the at least one processor to filter the transaction data to comprise only transactions completed within a subset time period, or
- wherein the transaction data further comprises a merchant type for each transaction of the plurality of transactions, and wherein the at least one route is generated based at least partially on the at least one mode of transportation determined from a merchant type of at least one transaction of the plurality of transactions.

14. The computer program product of claim 11, the program instructions being further programmed and/or configured to cause the at least one processor to update at predetermined intervals the bounded region by receiving new transaction data and re-generating the at least two clusters of transactions.

15. The computer program product of claim 11, the program instructions being further programmed and/or configured
i) to cause the at least one processor to generate and transmit a communication to the at least one merchant comprising account holder identification data of the at least one transaction account, or
ii) to cause the at least one processor to generate and transmit a communication to the account holder of the at least one transaction account, the communication comprising an automatic notification to a mobile device of the account holder, the communication triggered at least partially based on a current location of the mobile device and a location of the at least one merchant,
- the program instructions preferably being further programmed and/or configured to cause the at least one processor to, in response to determining that the account holder engaged in at least one new transaction with the at least one merchant in a second time period, update the bounded region by receiving new transaction data and re-generating the at least two clusters of transactions, or
- the program instructions preferably being further programmed and/or configured to cause the at least one processor to, in response to determining that the account holder engaged in at least one new transaction with the at least one merchant in a second time period, generate and transmit a communication to the at least one merchant comprising account holder identification data of the at least one transaction account.
